# EUROPÄISCHE PATENTANMELDUNG

(11) **EP 1 498 474 A1**
(43) Veröffentlichungstag der Anmeldung: **19.01.2005**
(21) Anmeldenummer: 04450147.6
(22) Anmeldetag: 16.07.2004
(51) Int. Cl.: C12G 1/02, A23L 3/00, C12H 1/12

(54) **Verfahren zur Weinbereitung unter Verwendung von natürlicher Kristalle**

(30) Priorität: 18.07.2003 AT 5152003
(71) Anmelder: Wurth, Leopold, 2380 Perchtoldsdorf (AT)
(72) Erfinder: Wurth, Leopold, 2380 Perchtoldsdorf (AT)
(74) Vertreter: Rippel, Andreas

(57) **Zusammenfassung**

Es wird ein Verfahren zur Weinbereitung beschrieben, bei dem der Maische, dem Most, dem Sturm bzw. dem vergorenen Wein natürlich vorkommende Kristalle beigegeben werden und der zur Abfüllung bestimmte Wein während des Abfüllvorganges nochmals über natürliche Kristalle geleitet wird.

## Beschreibung

Die vorliegende Erfindung betrifft ein Verfahren zur Weinbereitung. Bei der herkömmlichen Bereitung von Wein wird Traubenmaische entweder gepresst und anschließend vergoren (Weissweinherstellung) oder vergorene Traubenrnaische gepresst (Rotweinherstellung). Der entstandene Jungwein wird sodann in geeigneten Behältern bis zur Flaschenreife gelagert.

Überraschender Weise wurde gefunden, daß durch Inberührungbringen des Mostes, Sturmes oder Weines mit natürlich vorkommenden Kristallen der Reifeprozess des Weines positiv beeinflußt, insbesondere verkürzt werden kann. Weiters können die Harmonie des Weines sowie seine Lagerstabilität entscheidend verbessert werden.

Das erfindungsgemäße Verfahren ist dadurch gekennzeichnet, daß der Maische und/oder dem Most bzw. Sturm und/oder dem vergorenen Wein natürlich vorkommende Kristalle beigegeben werden und dass der zur Abfüllung bestimmte Wein während des Abfüllvorganges nochmals über natürliche Kristalle geleitet wird.

Als Kristalle finden vorzugsweise alpine bzw. alpinotype Kristalle Verwendung. Besonders bevorzugt sind Oxyde und/oder Silikate der Quarz- bzw. Beryllfamilie wie Bergkristall, Rauchquarz, Amethyst und Citrin bzw. Beryll, Smaragd und Aquamarin.

Von besonderem Vorteil ist ferner, wenn der Wein während seiner gesamten Lagerzeit in Flaschen, Fässern oder Tanks mit diesen Kristallen in Berührung gebracht wird.

Zur Anwendung kommen klare, energiereiche Kristalle, die während der Kontaktzeit mit der Flüssigkeit ihre positive Energie abgeben.

Beispiel: in einem 1000 1 fassenden Lagerbehälter wird eine ca. 10 kg schwere Bergkristallgruppe am Boden des Behälters positioniert. Anschließend wird der Behälter mit Wein befüllt. Nach einer Kontaktzeit von 3-6 Monaten wird der Wein zur Abfüllung gebracht. Während der Abfüllung wird der Wein über in der Abfüllanlage positionierte Bergkristalle geleitet und anschließend in einer rechtsdrehenden Bewegung in Flaschen gefüllt.

## Patentansprüche

1. Verfahren zur Weinbereitung, bei dem Traubenrnaische gepresst und vergoren wird bzw. vergorenen Traubenmaische gepresst wird und der entstehende Jungwein in geeigneten Behältern gelagert wird, **dadurch gekennzeichnet, dass** der Maische und /oder dem Most bzw. Sturm und/oder dem vergorenen Wein natürlich vorkommende Kristalle beigegeben werden, wobei der zur Abfüllung bestimmte Wein während des Abfüllvorganges nochmals über natürliche Kristalle geleitet wird.

2. Verfahren nach Anspruch 1, **dadurch gekennzeichnet, dass** als Kristalle alpine bzw. alpinotype Kristalle eingesetzt werden.

3. Verfahren nach Anspruch 1 oder 2, **dadurch gekennzeichnet, dass** als Kristalle Oxyde und /oder Silikate eingesetzt werden.

4. Verfahren nach Anspruch 3, **dadurch gekennzeichnet, dass** Kristalle der Quarzfamilie und /oder Beryllfamilie eingesetzt werden.

5. Verfahren nach Anspruch 4, **dadurch gekennzeichnet, dass** Quarzkristalle, vorzugsweise Bergkristall, Rauchquarz, Amethyst und Citrin eingesetzt werden.

6. Verfahren nach Anspruch 4, **dadurch gekennzeichnet, dass** Beryllkristalle, vorzugsweise gemeiner Beryll, Smaragd und Aquamarin eingesetzt werden.
